# EUROPÄISCHE PATENTSCHRIFT

(11) **EP 4 124 219 B1**
(45) Veröffentlichungstag und Bekanntmachung des Hinweises auf die Patenterteilung: **16.10.2024**
(21) Anmeldenummer: 21188495.2
(22) Anmeldetag: 29.07.2021
(51) Int. Cl.: A01B 39/18, A01B 41/02, A01B 39/08, A01B 39/10

(54) **BODENBEARBEITUNGSVORRICHTUNG, VERFAHREN ZUR BODENBEARBEITUNG IN EINER REIHE EINER REIHENKULTUR UND LANDWIRTSCHAFTLICHE BODENBEARBEITUNGSMASCHINE**
SOIL WORKING DEVICE, SOIL WORKING METHOD IN A ROW OF A ROW CROP AND AGRICULTURAL SOIL WORKING MACHINE
DISPOSITIF DE TRAITEMENT DU SOL, PROCÉDÉ DE TRAVAIL DU SOL POUR UNE CULTURE EN RANG ET MACHINE DE TRAVAIL DU SOL AGRICOLE

(43) Veröffentlichungstag der Anmeldung: 01.02.2023
(73) Patentinhaber: HORSCH LEEB Application Systems GmbH, 94405 Landau an der Isar (DE)
(72) Erfinder: LEEB, Theodor, 94405 Landau an der Isar (DE)
(74) Vertreter: v. Bezold & Partner Patentanwälte - PartG mbB

(56) Entgegenhaltungen:
- EP-A1- 3 387 890
- DE-A1- 3 131 356
- US-A- 1 048 808
- US-A- 3 463 239

## Beschreibung

Die Erfindung betrifft eine Bodenbearbeitungsvorrichtung, vorzugsweise zur Bodenbearbeitung in einer Reihe einer Reihenkultur. Die Erfindung betrifft zudem ein Verfahren zur Bodenbearbeitung in einer Reihe einer Reihenkultur. Darüber hinaus betrifft die Erfindung eine landwirtschaftliche Bodenbearbeitungsmaschine, vorzugsweise zur Bodenbearbeitung in einer Reihe einer Reihenkultur, insbesondere zur mechanischen Unkrautbekämpfung in einer Reihe einer Reihenkultur.

US 3 463 239 A offenbart ein landwirtschaftliches Gerät zum Jäten von Unkraut, das einen mit Rädern versehenen Rahmen aufweist, der in Bezug auf die darunter liegende tragende Erde vertikal verstellbar ist und zwei voneinander beabstandete, quer verlaufende Bahnen für die Bewegung von endlosen Jätelementen quer zur Bewegungsrichtung des Geräts aufweist. Ein mechanisches Gestänge wird von einer unabhängigen Energiequelle gespeist, um ein Jätelement entgegengesetzt zum anderen zu bewegen. Die Unkrautbekämpfungselemente sind mit mehreren länglichen, etwas flexiblen Zähnen versehen, die mit der darunter liegenden Erde in Verbindung stehen und sich durch diese bewegen. Zum allgemeinen Stand der Technik kann ferner auf die US 1 048 808 A und die DE 31 31 356 A1 verwiesen werden.

Eine Bodenbearbeitungsvorrichtung, respektive eine landwirtschaftliche Bodenbearbeitungsmaschine wurde bspw. durch die EP 3 387 890 A1 bereits bekannt. Die Bodenbearbeitungsvorrichtung ist zur mechanischen Unkrautbekämpfung von in Reihen stehenden Pflanzen von Reihenkulturen eingerichtet und umfasst hierfür einen Zinkenrotor. Die Bodenbearbeitungsvorrichtung weist den Nachteil auf, dass durch diese oftmals nicht nur Unkraut, sondern auch die Pflanzen der Reihenkultur beschädigt werden, da mittels der Zinkenrotoren sowohl Unkraut als auch Pflanzen der Reihenkultur bearbeitet werden. Insbesondere erfolgt mittels des Zinkenrotor keine Unterscheidung zwischen Unkraut und Pflanzen oder Saatkörner der Reihenkultur.

Aufgabe der Erfindung ist es somit, die beschriebenen Nachteile des Standes der Technik zu beseitigen. Insbesondere soll eine Bodenbearbeitung in einer Reihe einer Reihenkultur mit einfachen Mitteln wesentlich verbessert werden.

Diese Aufgaben werden gelöst durch eine Bodenbearbeitungsvorrichtung mit den Merkmalen des unabhängigen Anspruch 1, durch ein Verfahren zur Bodenbearbeitung in einer Reihe einer Reihenkultur mit den Merkmalen des Verfahrensanspruch 11, sowie durch eine landwirtschaftliche Bodenbearbeitungsmaschine mit den Merkmalen des Anspruch 15. Vorteilhafte Ausführungsformen und Weiterbildungen der Erfindung sind in den Ansprüchen und der folgenden Beschreibung unter teilweiser Bezugnahme auf die Figuren offenbart.

Es sei vorab darauf hingewiesen, dass zur Vermeidung von Wiederholungen im Zusammenhang mit der Bodenbearbeitungsvorrichtung offenbarte Merkmale auch verfahrensgemäß und für eine landwirtschaftliche Bodenbearbeitungsmaschine offenbart gelten und beanspruchbar sein sollen. In umgekehrter Weise gilt das gleiche, so dass auch alle Aspekte, erfindungsgemäße Merkmale und Ausführungsvarianten die im Zusammenhang mit dem Verfahren und/oder der landwirtschaftlichen Bodenbearbeitungsmaschine offenbart sind, demnach auch für die Bodenbearbeitungsvorrichtung offenbart und entsprechend beanspruchbar sind. Die vorgenannten Aspekte und erfindungsgemäßen Merkmale und Ausführungsvarianten, insbesondere im Hinblick auf die Bodenbearbeitungsvorrichtung, das Verfahren und/oder die landwirtschaftliche Bodenbearbeitungsmaschine gelten somit auch für die Bodenbearbeitungsvorrichtung, das Verfahren und/oder für die landwirtschaftliche Bodenbearbeitungsmaschine und sind in beliebiger Weise und Frei miteinander kombinierbar.

Die Erfindung betrifft zur Lösung der Aufgaben eine Bodenbearbeitungsvorrichtung, vorzugsweise zur Bodenbearbeitung in einer Reihe einer Reihenkultur. Die Bodenbearbeitungsvorrichtung ist zur Montage an einer Trägerkonstruktion (z.B. Rahmenkonstruktion, Fahrzeugchassis oder dergl.) und zur Bewegung mit einer Fahrgeschwindigkeit in Fahrtrichtung parallel entlang einer Reihe einer Reihenkultur auf einer landwirtschaftlichen Fläche eingerichtet.

Um eine Bodenbearbeitung in einer Reihe einer Reihenkultur mit einfachen Mitteln wesentlich zu verbessern ist erfindungsgemäß vorgesehen, dass die Bodenbearbeitungsvorrichtung Werkzeuge aufweist, welche sternförmig entlang einer Umlaufbahn mit veränderbarer Bewegungsgeschwindigkeit bewegt werden, wobei die Umlaufbahn in einem Winkel β quer zur Fahrtrichtung orientiert ist.

Die Erfindung macht sich die Erkenntnis zu Nutze, dass durch eine Anordnung der Umlaufbahn in einem Winkel zur Fahrtrichtung, eine Bewegung quer zu den Reihen einer Reihenkultur und somit eine Bearbeitung von Zwischenräumen von Pflanzen und/oder Saatkörnern einer Reihenkultur ermöglicht wird.

Im Kontext der Erfindung umfasst die Definition einer Bodenbearbeitung in einer Reihe einer Reihenkultur, insbesondere eine mechanische Unkrautbekämpfung. Zudem umfasst die Definition in einer Reihe einer Reihenkultur insbesondere eine Bodenbearbeitung zwischen zwei Pflanzen und/oder Saatkörnern einer Reihenkultur (z.B. Mais, Zuckerrüben, Getreide (z.B. Weizen) und/oder dergl.). Wobei die Reihenkultur insbesondere Reihen mit Abständen zueinander von bspw. 12,5cm oder 15cm oder 45cm oder 50cm oder 75cm oder dergl. aufweist.

Es sei zudem darauf hingewiesen, dass gemäß der vorliegenden Beschreibung unter die Definition von Pflanzen auch Saatkörner, welche noch nicht aufgelaufen sind subsumierbar sind und dementsprechend im Kontext der Erfindung auch Saatkörner vom Begriff Pflanzen mit umfasst sind.

Der Winkel β beträgt mindestens 10° oder mindestens 20° oder mindestens 30°. Alternativ oder ergänzend beträgt der Winkel β maximal 80° oder maximal 70° oder maximal 60°.

Gemäß einer bevorzugten Ausführungsvariante der Erfindung kann vorgesehen sein, dass die Bewegungsgeschwindigkeit größer ist als die Fahrgeschwindigkeit. Somit ist durch die Anordnung in einem Winkel zur Fahrtrichtung sichergestellt, dass die Werkzeuge jeweils in konstanten, auf die Fahrgeschwindigkeit abgestimmten Abständen zwischen zwei Pflanzen einer Pflanzenreihe hindurchbewegt werden.

Die Bewegungsrichtung der Werkzeuge entlang der Umlaufbahn ist insbesondere identisch zur Fahrrichtung.

Eine bevorzugte Ausführungsvariante der Erfindung kann insbesondere vorsehen, dass eine Differenz der Bewegungsgeschwindigkeit zur Fahrgeschwindigkeit je größer ist, desto größer der Winkel β ist. Somit wird basierend auf dem Winkel β und der Fahrgeschwindigkeit sichergestellt, dass keinerlei Pflanzen der Pflanzenreihe beschädigt werden.

Um zu verhindern das Pflanzen und/oder Saatkörner einer Reihe der Reihenkultur durch eine falsche Bewegungsgeschwindigkeit oder Fahrgeschwindigkeit beschädigt werden, kann eine Ausführungsvariante der Erfindung vorsehen, dass zur Veränderung der Bewegungsgeschwindigkeit, die Bewegungsgeschwindigkeit steuer- und/oder regelbar ist, vorzugsweise mittels einer Antriebseinrichtung steuer- und/oder regelbar ist, wobei ein Steuern und/oder Regeln der Bewegungsgeschwindigkeit anhand einer Fahrgeschwindigkeit derartig erfolgt, dass eine Differenz der Fahrgeschwindigkeit und einer durch die Bewegungsgeschwindigkeit hervorgerufenen Relativgeschwindigkeit der Werkzeuge in Fahrtrichtung im Wesentlichen null ist.

Alternativ oder ergänzend hierzu ist es möglich, dass die Fahrgeschwindigkeit steuer- und/oder regelbar ist, vorzugsweise mittels eines Fahrantriebes steuer- und/oder regelbar ist, wobei ein Steuern und/oder Regeln der Fahrgeschwindigkeit anhand der Bewegungsgeschwindigkeit derartig erfolgt, dass eine Differenz der Fahrgeschwindigkeit und einer durch die Bewegungsgeschwindigkeit hervorgerufenen Relativgeschwindigkeit der Werkzeuge in Fahrtrichtung im Wesentlichen null ist.

Die Antriebseinrichtung kann hierbei zumindest einen Motor, einen Antrieb oder dergl. umfassen. Ebenso kann der Fahrantrieb bspw. einen Motor, Antrieb oder dergl. umfassen. Wobei die Antriebseinrichtung und/oder der Fahrantrieb zudem mit einer Steuereinrichtung gekoppelt sein können oder von einer Steuereinrichtung umfasst sein können. Wobei der Motor und/oder der Antrieb oder dergl. elektrisch und/oder hydraulisch und/oder pneumatisch betreibbar sein können.

Die Erfassung der Fahrgeschwindigkeit und/oder der Bewegungsgeschwindigkeit kann in an sich bekannter weise mittels Geschwindigkeitssensoren, Beschleunigungssensoren und/oder dergl. erfolgen. Anhand einer Differenz der somit erfassten Fahrgeschwindigkeit und/oder Bewegungsgeschwindigkeit können die Antriebseinrichtung und/oder Fahrantrieb entsprechend mittels der Steuereinrichtung steuer- und/oder regelbar sein. Wobei die Steuereinrichtung auch eingerichtet sein kann, mit der Antriebseinrichtung und/oder dem Fahrantrieb gekoppelte Übersetzungsgetriebe entsprechend mit zu berücksichtigen.

Eine bevorzugte Ausführungsvariante der Erfindung kann vorsehen, dass die Werkzeuge in aufrechter Weise (z.B. Senkrecht zur Fahrtrichtung und/oder zur Reihe einer Reihenkultur) an einem, vorzugsweise verformbaren (das heißt beweglichen, elastischen und/oder dergl.), Endlosmontageelement (z.B. Kette, Keilriemen, Riemen und/oder dergl.) angeordnet sind.

Wobei das Endlosmontageelement auch durch eine Verbindung aus einem Element erzeugt werden kann.

Vorzugsweise ist es möglich, dass die Umlaufbahn einen zumindest abschnittweise Linear verlaufenden Abschnitt aufweist, vorzugsweise entlang deren gesamter Längserstreckung Linear verläuft.

Gemäß einer bevorzugten Ausführungsvariante der Erfindung ist es möglich, dass die Werkzeuge in aufrechter Weise an einem, vorzugsweise verformbaren, Endlosmontageelement angeordnet sind.

Um eine an Pflanzen und/oder Saatkörner einer Reihe angepasste Bodenbearbeitung zu erreichen ist es gemäß einer Weiterbildung der Erfindung möglich, dass der horizontale Abstand von zwei Werkzeugen zueinander größer ist zu einem Abstand von zwei Pflanzen und/oder Saatkörnern einer Reihe. Somit bildet sich auch durch die Anordnung im Winkel β ein gleicher Abstand zwischen den Werkzeugen und den Pflanzen der Pflanzenreihe aus. Alternativ oder ergänzend hierzu ist es auch möglich, dass die Differenz des horizontalen Abstands von zwei Werkzeugen zueinander zu einem Abstand von zwei Pflanzen und/oder Saatkörnern einer Reihe je größer ist, desto größer der Winkel ist. Alternativ oder ergänzend ist es zweckmäßig möglich, dass die Differenz des horizontalen Abstands von zwei Werkzeugen zueinander zu einem Abstand von zwei Pflanzen und/oder Saatkörnern einer Reihe vorzugsweise mindestens 1cm oder mindestens 2cm oder mindestens 3cm oder mindestens 5cm beträgt und/oder dass der horizontale Abstand von zwei Werkzeugen auf dem Endlosmontageelement veränderbar ist.

Der Abstand von zwei Werkzeugen zueinander entspricht somit insbesondere einer senkrechten Projektion im Winkel β zum Abstand von zwei Pflanzen einer Pflanzenreihe.

Mittels der erfindungsgemäßen Anordnung der Umlaufbahn ist es zweckmäßig möglich, dass die Werkzeuge (z.B. mittels des Endlosmontageband) quer gegenüber den Reihen einer Reihenkultur bewegt werden, um dies sicher zu stellen kann vorgesehen sein, dass die Umlaufbahn in Fahrtrichtung eine Längserstreckung aufweist welche größer oder gleich ist zu einem Horizontalen Abstand von zwei Werkzeugen zueinander. Alternativ oder zusätzlich hierzu kann vorgesehen sein, dass die Umlaufbahn eine derartige aufrechte Ausrichtung aufweist, dass zwei Werkzeuge übereinander entlang der Umlaufbahn bewegbar sind.

Zur Sicherstellung, dass bei Beginn der Bodenbearbeitung keine Pflanzen und/oder Saatkörner mittels der Werkzeuge beschädigt werden, ist es möglich, dass die Werkzeuge in einer, keine Bewegungen ausführenden, Grundstellung eine nicht mittige Position gegenüber der Umlaufbahn aufweisen, insbesondere keine Anordnung (z.B. Lage) im Bereich der Reihe der Reihenkultur aufweisen.

Die Werkzeuge können bspw. durch Zinken, Schare, Striegel und/oder dergl. gebildet sein, welche vorzugsweise zumindest quer zur Fahrtrichtung orientierte Schneiden aufweisen können.

Es sei darauf hingewiesen das sternförmig im Kontext der Erfindung nicht zwingend eine Anordnung der Werkzeuge am Umfang eines Kreises verlangt, sondern dass von der Definition auch von Kreisen abweichende Formen, Konturen oder dergl. umfasst sind, bspw. Ovale, Ellipsenförmige oder dergl., insbesondere umfasst sind zumindest abschnittweise bogenförmige Formen, Konturen oder dergl. Insbesondere ist es möglich, dass die Grundform der sternförmigen Anordnung durch eine Form gebildet ist, die abschnittweise bogenförmig und abschnittweise eben ist. Wobei insbesondere das Endlosmontageband entlang dieser Grundform geführt werden kann und somit zweckmäßig ebenfalls diese Kontur, Form oder dergl. aufweisen kann.

Die Fahrtrichtung kann insbesondere durch eine Bewegungsrichtung der Bodenbearbeitungsvorrichtung, respektive der Bodenbearbeitungsmaschine definiert sein und bspw. einer Vorwärtsrichtung, respektive Vortriebsrichtung entsprechen.

Die Erfindung betrifft zur Lösung der Aufgaben zudem ein Verfahren zur Bodenbearbeitung in einer Reihe einer Reihenkultur.

Das Verfahren ist gekennzeichnet durch ein Bereitstellen einer Bodenbodenbearbeitungsvorrichtung und/oder ein Bereitstellen mehrerer Bodenbearbeitungsvorrichtungen, mit Werkzeugen, welche Werkzeuge sternförmig entlang einer Umlaufbahn mit einer Bewegungsgeschwindigkeit bewegt werden, wobei die Umlaufbahn in einem Winkel β quer zur Fahrtrichtung orientiert ist.

Das Verfahren umfasst zudem, ein Bewegen der einen Bodenbearbeitungsvorrichtung und/oder der mehreren Bodenbearbeitungsvorrichtungen in Fahrtrichtung parallel entlang einer Reihe einer Reihenkultur mittels einer Fahrgeschwindigkeit.

Zudem umfasst das Verfahren ein Steuern- und/oder Regeln der Bewegungsgeschwindigkeit und/oder der Fahrgeschwindigkeit derartig, dass eine Differenz der Fahrgeschwindigkeit und einer durch die Bewegungsgeschwindigkeit hervorgerufenen Relativgeschwindigkeit der Werkzeuge in Fahrtrichtung im Wesentlichen null ist.

Eine Weiterbildung des Verfahren kann zudem gekennzeichnet sein durch, einmaliges und/oder kontinuierliches Erfassen einer Position zumindest einer Pflanze und/oder eines Saatkorn einer Reihe mittels einer Erfassungseinrichtung, und einer Bestimmung der Position der Pflanze und/oder des Saatkorn gegenüber zumindest einem Werkzeug sowie einer Anpassung der Position des Werkzeugs gegenüber der Pflanze auf eine Sollposition (z.B. mittig von zwei Pflanzen oder angrenzend an eine Pflanze).

Ein einmaliges Erfassen kann gekennzeichnet sein durch ein Erfassen einer Pflanze oder eines Saatkorns, bspw. bei Beginn der Bodenbearbeitung in einer Reihe. Wobei dies mitunter ausreichend sein kann, insofern die Pflanzen und/oder Körner einen im wesentlichen gleichen Abstand zueinander aufweisen, das heißt insbesondere ein definiertes Raster zueinander aufweisen (bspw. wenn diese mittels Einzelkornsaat gesät wurden).

Ein kontinuierliches Erfassen kann gekennzeichnet sein durch ein Erfassen jeder Pflanze und/oder jedes Saatkorn. Ein kontinuierliches Erfassen kann alternativ oder ergänzend auch gekennzeichnet sein durch ein periodisches und/oder intervallweises Erfassen von Pflanzen und/oder Saatkörnen, welche Periode und/oder welches Intervall bspw. durch Abstände, Zeiten, Positionen und/oder dergl. definiert sein kann.

Die Erfassungseinrichtung kann bspw. durch einen oder mehrere Radarsensor(en), Lasersensor(en) und/oder dergl. gebildet sein. Die Erfassungseinrichtung kann alternativ oder zusätzlich auch eine oder mehrere Kamera(s) aufweisen oder umfassen.

Die Erfassungseinrichtung kann alternativ oder ergänzend auch mit einem Positionsbestimmungssystem signalverbunden und/oder signalverbindbar sein und/oder durch ein Positionsbestimmungssystem gebildet sein. Das Positionsbestimmungssystem ist insbesondere ein Satelliten gestütztes Positionsbestimmungssystem, wie bspw. ein GPS-System, RTK-System oder dergl. Wobei das Positionsbestimmungssystem eingerichtet sein kann, Positionen von Pflanzen und/oder Saatkörner an die Erfassungseinrichtung zu übertragen, wobei die Positionen bspw. insbesondere bei einem vorhergehenden Arbeitsprozess (z.B. Aussaat) dokumentiert wurden.

Es ist alternativ oder ergänzend möglich, dass die Erfassungseinrichtung (z.B. das Positionsbestimmungssystem) eingerichtet ist, um die Bodenbearbeitungsvorrichtung, respektive die landwirtschaftliche Bodenbearbeitungsmaschine entlang einer Reihe einer Reihenkultur auf einer landwirtschaftlichen Fläche zu bewegen, bspw. entsprechende, ein Lenkung der landwirtschaftlichen Bodenbearbeitungsmaschine mittelbar und/oder unmittelbar beeinflussende Positionssignale bereitzustellen.

Eine Bestimmung der Position der Pflanze und/oder des Saatkorns gegenüber einem Werkzeug kann bspw. mittels der Erfassungseinrichtung erfolgen oder mittels einer Steuereinrichtung erfolgen. Wobei die Bestimmung unter Berücksichtigung eines definierten und/oder definierbaren Abstandswertes zwischen der Erfassungseinrichtung und dem Werkzeug erfolgen kann. Das heißt, in dem ein Abstand zwischen der Erfassungseinrichtung und dem Werkzeug bekannt ist sowie ein Abstand zwischen der Erfassungseinrichtung und der Pflanze und/oder dem Saatkorn erfasst wird, kann eine exakte Position der Werkzeuge gegenüber der Pflanze und/oder dem Saatkorn bestimmt werden. Wobei es auch denkbar ist, dass ein Abstand zwischen der Erfassungseinrichtung und der Pflanze und/oder dem Saatkorn dadurch bestimmt wird, in dem ein Abstand definiert ist, ab welchem die Erfassungseinrichtung ein Signal einer Position einer Pflanze und/oder einem Saatkorn ausgibt.

Eine Anpassung der Position der Werkzeuge gegenüber der Pflanze und/oder einem Saatkorn kann auf verschiedenste Art und Weise erfolgen, zweckmäßig insbesondere durch eine Erhöhung oder Verringerung der Bewegungsgeschwindigkeit und/oder eine Drehrichtungsumkehr der Bewegung der Werkzeuge entlang der Kurvenbahn und/oder eine Erhöhung oder Verringerung der Fahrgeschwindigkeit.

Eine bevorzugte Weiterbildung des Verfahrens kann vorsehen, dass die mehreren Bodenbearbeitungsvorrichtungen eine zumindest weitgehend identische Bewegungsgeschwindigkeit aufweisen und/oder unterschiedliche Bewegungsgeschwindigkeiten aufweisen und/oder eine unterschiedliche oder identische Sollposition (bspw. ein Werkzeug vorne angrenzend an eine Pflanze und ein Werkzeug hinten angrenzend an eine Pflanze) aufweisen und/oder derartig entlang der Umlaufbahn bewegt werden, dass zumindest ein Zwischenraum zwischen zwei Pflanzen und/oder Saatkörner einer Reihe zumindest doppelt bearbeitet wird.

Wobei nebeneinander angeordnete Bodenbearbeitungsvorrichtungen unterschiedliche Bewegungsgeschwindigkeiten aufweisen können, um somit bspw. auch bei Kurvenfahrten optimale Ergebnisse zu erreichen.

Es ist möglich, dass die Bewegungsgeschwindigkeit an entsprechende Fahrdynamische (bspw. Veränderungen der Fahrgeschwindigkeit und/oder der Zentrifugalbeschleunigung) Veränderungen angepasst wird.

Es ist möglich, dass die Fahrgeschwindigkeit und/oder die Zentrifugalbeschleunigung (z.B. bei Kurvenfahrt) mittels eines Sensors erfasst wird und/oder mittels mehrerer Sensoren (z.B. Beschleunigungssensoren, Drehratensensoren und/oder dergl.) erfasst wird. Wobei die Sensoren auch derartig eingerichtet und bspw. mittels einer Steuereinrichtung gekoppelt sein können, um unterschiedliche Fahrgeschwindigkeiten an unterschiedlichen Positionen der Bodenbearbeitungsmaschine bei Kurvenfahrten erfassen zu können, und um somit Zentrifugalbeschleunigungen erfassen zu können.

Die Erfindung umfasst zur Lösung der Aufgaben zudem eine landwirtschaftliche Bodenbearbeitungsmaschine, vorzugsweise zur Bodenbearbeitung in einer Reihe einer Reihenkultur, insbesondere zur mechanischen Unkrautbekämpfung in einer Reihe einer Reihenkultur.

Die Bodenbearbeitungsmaschine ist eingerichtet, mit einer Fahrgeschwindigkeit in Fahrtrichtung parallel entlang einer Reihe einer Reihenkultur auf einer landwirtschaftlichen Fläche bewegt zu werden.

Die Bodenbearbeitungsmaschine weist zudem eine Trägerkonstruktion auf, wobei an der Trägerkonstruktion zumindest zwei Bodenbearbeitungsvorrichtungen nebeneinander angebracht sind und/oder zwei Bodenbearbeitungsvorrichtungen nebeneinander und zumindest zwei Bodenbearbeitungsvorrichtungen hintereinander angebracht sind.

Die erfindungsgemäße Bodenbearbeitungsmaschine zeichnet sich dadurch aus, dass die Bodenbearbeitungsvorrichtungen wie hierin beschrieben ausgeführt sind, insbesondere dadurch, dass die Bodenbearbeitungsvorrichtungen nach zumindest einem der Ansprüche 1 bis 11 ausgeführt sind.

Alternativ oder zusätzlich zeichnet sich die erfindungsgemäße Bodenbearbeitungsmaschine dadurch aus, dass diese eingerichtet ist, ein Verfahren wie hierin beschrieben auszuführen, insbesondere dadurch, dass die Bodenbearbeitungsmaschine eingerichtet ist, ein Verfahren nach zumindest einem der Ansprüche 12 bis 15 auszuführen.

Zur Verbesserung der mittels der Bodenbearbeitungsmaschine durchgeführten Bodenbearbeitung, insbesondere zur Bearbeitung der Zwischenräume zwischen zwei Reihen der Reihenkultur ist es gemäß einer Weiterbildung der Erfindung möglich, dass zwischen zwei, quer zur Fahrtrichtung, nebeneinander angeordneten Bodenbearbeitungsvorrichtungen Lockerungselemente angeordnet sind, wobei die Lockerungselemente in dessen Höhenlage gegenüber den Bodenbearbeitungsvorrichtungen veränderbar gelagert sind und/oder wobei die Bodenbearbeitungsvorrichtungen in dessen Höhenlage gegenüber den Lockerungselementen und/oder der Trägerkonstruktion veränderbar gelagert sind.

Es ist möglich, dass die Bodenbearbeitungsvorrichtungen mittels einer Verstelleinrichtung (z.B. Parallellogramm, Linearelement, Linearantrieb und/oder dergl.) höhenverstellbar gegenüber der Trägerkonstruktion gelagert sind.

Es ist möglich, dass die zumindest zwei nebeneinander angebrachten und/oder die zumindest zwei hintereinander angebrachten Bodenbearbeitungsvorrichtungen unterschiedliche Höhenlagen zueinander aufweisen können.

Eine optimale Höhenlage der Bodenbearbeitungseinrichtung kann gemäß einer Ausführungsvariante dadurch erreicht werden, dass die Höhenlage der Bodenbearbeitungsvorrichtung gegenüber der Trägerkonstruktion Anhand einer Bewegungsgeschwindigkeit und/oder Anhand einer Fahrgeschwindigkeit und/oder Anhand einer Position der Werkzeuge gegenüber einer Pflanze und/oder einem Saatkorn einer Reihe veränderbar ist.

Gemäß einer Alternativen oder ergänzenden Ausführungsvariante wäre es jedoch auch denkbar, dass die Bewegungsgeschwindigkeit und/oder die Fahrgeschwindigkeit anhand einer Höhenlage der Bodenbearbeitungsvorrichtung gegenüber der Trägerkonstruktion veränderbar ist.

Zur Erfassung der Höhenlage der Bodenbearbeitungsvorrichtung ist es möglich, dass eine Sensoreinrichtung vorgesehen ist, welche Sensoreinrichtung dazu eingerichtet ist, eine Höhenlage der Bodenbearbeitungsvorrichtung gegenüber der Trägerkonstruktion und/oder gegenüber der landwirtschaftlichen Fläche zu erfassen. Wobei die Sensoreinrichtung bspw. einen oder mehrere zwischen der Trägerkonstruktion und/oder Bodenbearbeitungsvorrichtung angeordnete Winkelsensoren umfassen kann und/oder an der Bodenbearbeitungsvorrichtung angeordnete Abstandssensoren (z.B. Ultraschallsensoren) umfassen kann. Auch Kraftsensoren, welche eine auf die Werkzeuge und/oder die Bodenbearbeitungsvorrichtung wirkende Kraft ermitteln wären ergänzend oder alternativ denkbar.

Die Bodenbearbeitungsmaschine kann als eine selbstfahrende oder als eine mittels eines Zugfahrzeug (z.B. Traktor) gezogene oder als eine an einem Zugfahrzeug angebaute (z.B. mittels Dreipunkt-Anhängung) Bodenbearbeitungsmaschine ausgeführt sein.

Gemäß einer bevorzugten Ausführungsform kann vorgesehen sein, dass die Bodenbearbeitungsmaschine als selbstfahrende Bodenbearbeitungsmaschine ausgeführt ist, vorzugsweise als autonome (z.B. teilautonom und/oder vollautonom) selbstfahrende Bodenbearbeitungsmaschine ausgeführt ist.

Die Steuereinrichtung weist bspw. eine Rechnereinheit, einen Bordcomputer und/oder dergl. auf und umfasst zudem einen Steuer- und/oder Regelkreis, insbesondere einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung ausgebildet ist. Welche Signal- und/oder Befehlsübertragung auch drahtlos (z.B. mittels WLAN) erfolgen kann. Wobei die Steuereinrichtung auch ein entsprechendes Steuer- und/oder Regelungsprogramm aufweisen kann. Im Kontext der Erfindung umfasst der Begriff der Steuereinrichtung, insbesondere die Gesamtheit der Bauteile zur Signal- und/oder Befehlsübertragung. Dementsprechend auch Rechnereinheiten, CPU's und/oder dergl. Ebenso umfasst sind entsprechend auch in den jeweiligen Sensoren oder Sensoreinheiten oder Sensoranordnungen oder Erfassungseinrichtungen integrierte Steuereinrichtungen. Ebenso sei darauf hingewiesen, dass die Signale und/oder Daten der Sensoren / Messeinrichtungen / Erfassungseinrichtungen und/oder dergl. jeweils als Rückkoppelung für eine Steuer- und/oder Regelgröße herangezogen werden können.

Es sei noch darauf hingewiesen, dass die Begriffe "Steuern" und "Regeln" und "Steuereinrichtung" sich auf elektronische und/oder pneumatische und/oder hydraulische Steuerungen oder Regelungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1A: eine Perspektivansicht einer Ausführungsvariante einer landwirtschaftlichen Bodenbearbeitungsmaschine mit einer Vielzahl von Bodenbearbeitungsvorrichtungen,
- Figur 1B: eine Seitenansicht einer Bodenbearbeitungsmaschine gemäß der Figur 1A,
- Figur 2A: eine Perspektivansicht einer erfindungsgemäßen Bodenbearbeitungsvorrichtung,
- Figur 2B: eine Draufsicht einer Bodenbearbeitungsvorrichtung gemäß der Figur 2A,
- Figur 2C: eine Seitenansicht der Bodenbearbeitungsvorrichtung gemäß der Figur 2A sowie eine Schnittansicht dieser Bodenbearbeitungsvorrichtung,
- Figur 3: eine Schematische Draufsicht auf eine Pflanzenreihe mit schematisch dargestellten Werkzeugen und einer Projektion der Abstände der Körner zur Definition des horizontalen Abstands von zwei Werkzeugen,
- Figur 4: eine Seitenansicht eines Ausführungsbeispiels einer selbstfahrenden Bodenbearbeitungsmaschine.

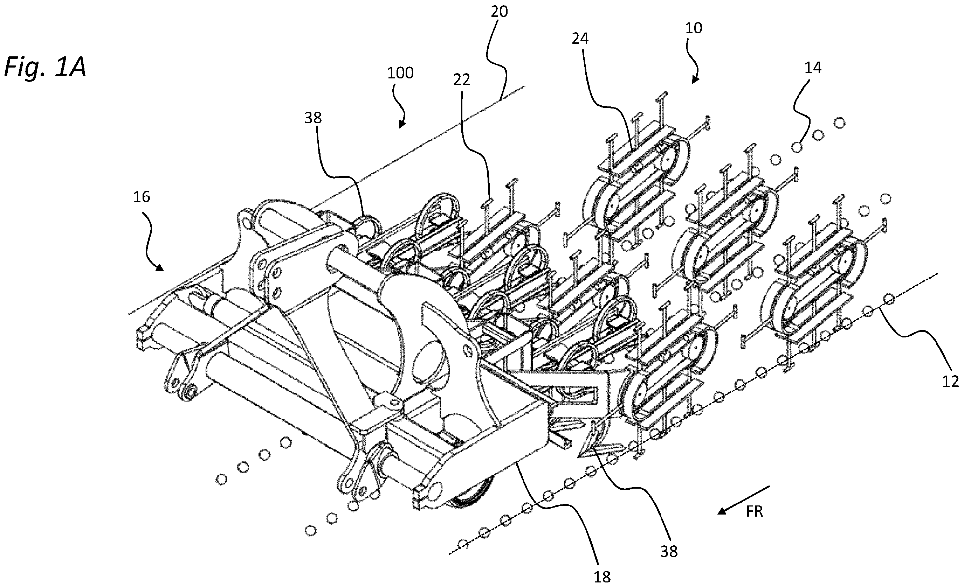

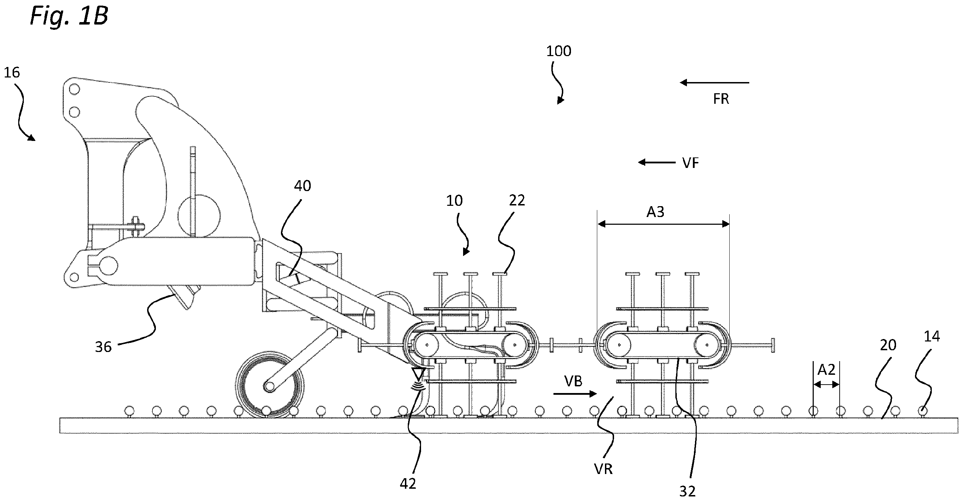

Die in den Figuren 1 bis 4 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

Die Figuren 1A bis 4 zeigen unterschiedliche Ansichten von Ausführungsbeispielen von Bodenbearbeitungsvorrichtungen 10 sowie einer landwirtschaftlichen Bodenbearbeitungsmaschine 100, die unter gemeinsamer Bezugnahme auf die Figuren 1A bis 4 beschrieben werden.

Die Figuren zeigen eine Ausführungsvariante einer landwirtschaftlichen Bodenbearbeitungsmaschine 100 mit daran angeordneten Bodenbearbeitungsvorrichtungen 10. Diese dienen jeweils zur Bodenbearbeitung in einer Reihe 12 einer Reihenkultur, insbesondere zur Bodenbearbeitung zwischen zwei Pflanzen 14, respektive Saatkörner 14, in einer Reihe 12 einer, insbesondere landwirtschaftlichen Reihenkultur, wie bspw. Mais, Zuckerrüben und/oder dergl. Zur Verdeutlichung einer derartigen schematischen bzw. virtuellen Reihe 12 ist in den Figuren 1A und 2 und 3 jeweils eine unterbrochene Linie eingezeichnet.

Die Bodenbearbeitungsmaschine 100 gemäß der Figuren 1 ist als eine, an ein Zugfahrzeug (hier nicht dargestellt) anbaubare Maschine ausgeführt und umfasst hierfür eine Dreipunkt-Anhängung 16. Wobei dies insbesondere bedeutet, dass mittels des Zugfahrzeug eine Fahrgeschwindigkeit VF der Bodenbearbeitungsvorrichtungen 10, respektive der Bodenbearbeitungsmaschine 100 erzeugt wird, mit welcher Fahrgeschwindigkeit VF die Bodenbearbeitungsvorrichtungen 10, respektive die Bodenbearbeitungsmaschine 100 in Fahrtrichtung FR parallel entlang einer Reihe 12 einer Reihenkultur auf einer landwirtschaftlichen Fläche 20 bewegt wird.

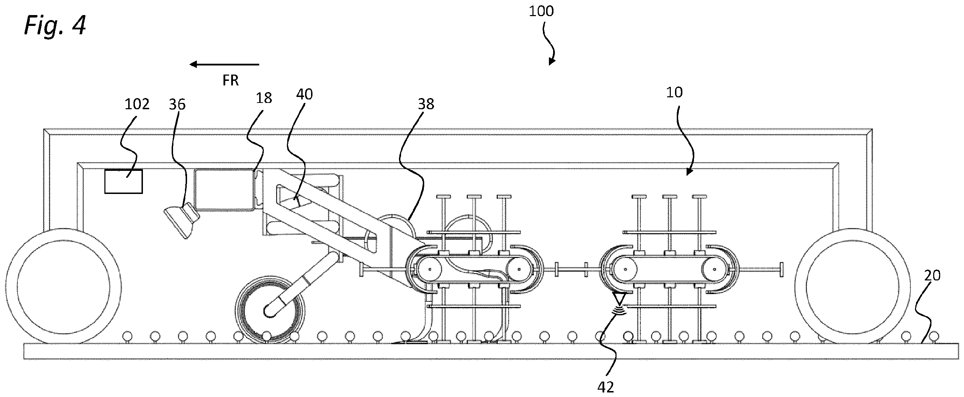

Die Bodenbearbeitungsmaschine 100 gemäß der Figur 4 ist demgegenüber als eine selbstfahrende Bodenbearbeitungsmaschine 100 ausgeführt, vorzugsweise als autonome (z.B. teilautonom und/oder vollautonom) selbstfahrende Bodenbearbeitungsmaschine 100, das heißt, dass diese einen eigenen Fahrantrieb 102 (bspw. Motor) aufweist. Wobei somit mittels des Fahrantrieb 102 eine Fahrgeschwindigkeit VF der Bodenbearbeitungsvorrichtungen 10, respektive der Bodenbearbeitungsmaschine 100 erzeugt wird, welche Fahrgeschwindigkeit VF zudem steuer- und/oder regelbar sein kann.

Die Bodenbearbeitungsmaschinen 100 gemäß der Figuren 1 und 4 sind jeweils eingerichtet, ein Verfahren zur Bodenbearbeitung in einer Reihe 12 einer Reihenkultur wie hierin beschrieben auszuführen. Insbesondere mittels einer Bodenbearbeitungsvorrichtung 10 wie hierin beschrieben auszuführen.

Die Bodenbearbeitungsvorrichtung 10 ist gemäß der Ausführungsbeispiele an einer, durch eine Rahmenkonstruktion (Figur 1) oder ein Fahrzeugchassis (Figur 4) gebildeten, Trägerkonstruktion 18 angebaut. Wobei die Bodenbearbeitungsvorrichtung 10 somit zur Bewegung mit einer Fahrgeschwindigkeit VF in Fahrtrichtung FR parallel entlang einer Reihe 12 einer Reihenkultur einer landwirtschaftlichen Fläche 20 eingerichtet ist.

Die Bodenbearbeitungsvorrichtungen 10 weisen jeweils Werkzeuge 22 (hier stark vereinfacht dargestellt) auf, welche sternförmig entlang einer Umlaufbahn 24 (z.B. Führungskulisse oder dergl.) mit veränderbarer Bewegungsgeschwindigkeit VB bewegt werden, wobei die Umlaufbahn 24 in einem Winkel β quer zur Fahrtrichtung FR orientiert ist. Wobei die Grundform der sternförmigen Anordnung gemäß der Ausführungsbeispiele durch eine Form gebildet ist, die abschnittweise bogenförmig und abschnittweise eben ist.

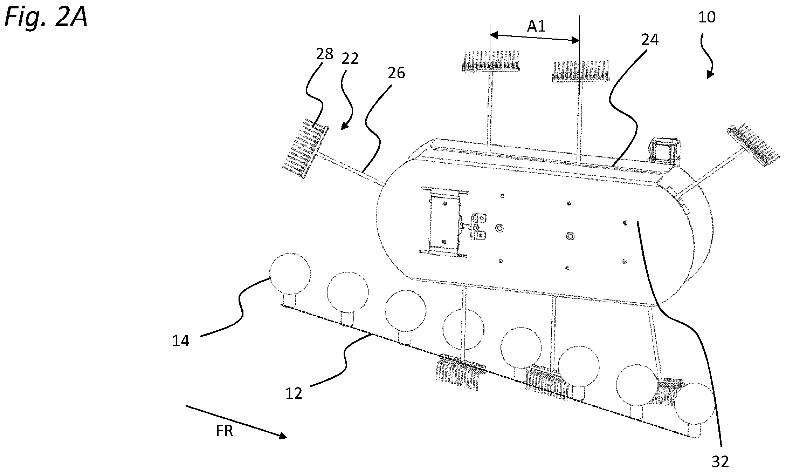

Die Werkzeuge 22 gemäß der Ausführungsbeispiele sind durch einen Steher 26 und einem an diesem angeordnetem Schar 28 in Form eines Meißels (Figur 1A, 1B, 4) oder in Form eines Striegels (Figuren2A bis 2C) gebildet, welcher Meißel bzw. Striegel dazu eingerichtet ist, zwischen zwei Pflanzen 14 befindliches Unkraut und/oder Boden zu bewegen oder zu beseitigen. Die Werkzeuge 22 könnten auch anders aufgebaut und durch andere Zinken, Schare und/oder dergl. gebildet sein.

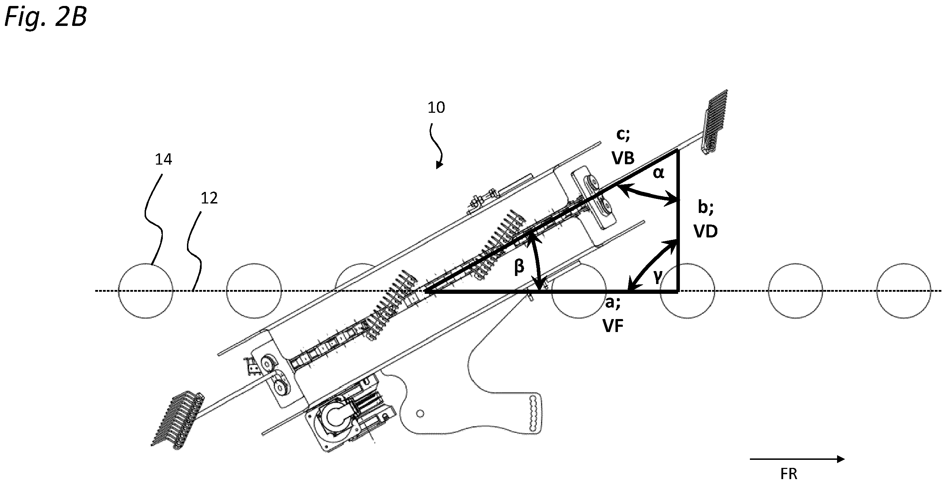

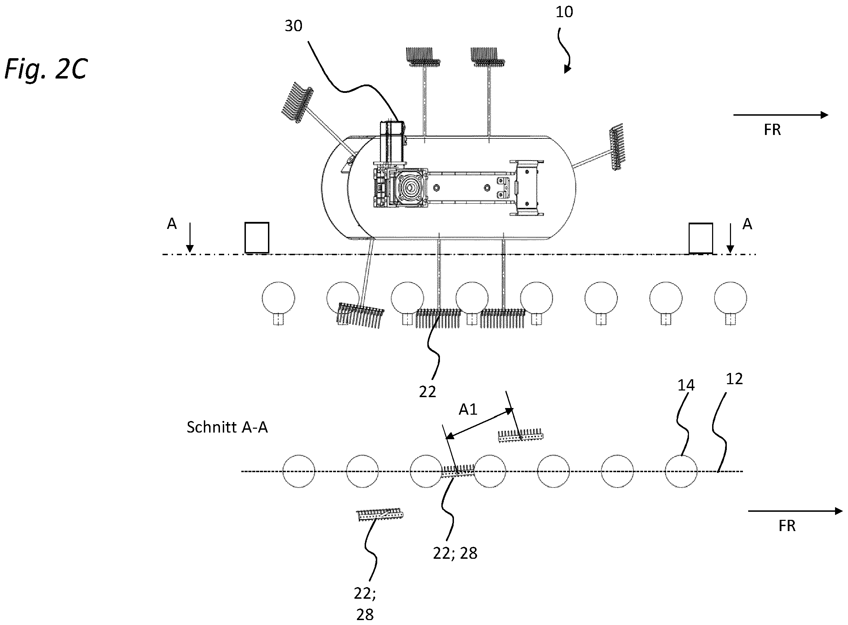

Wie insbesondere aus den Figuren 2 hervorgeht, ist es durch eine Anordnung der Umlaufbahn 24 in einem Winkel β zur Fahrtrichtung FR möglich, dass durch angepasste Bewegungsgeschwindigkeiten VB an die Fahrgeschwindigkeiten VF Zwischenräume zwischen zwei Pflanzen und/oder Saatkörnen in einer Reihe 12 einer Reihenkultur bearbeitet werden können ohne hierbei Pflanzen 14 und/oder Saatkörner 14 zu beschädigen und/oder Saatkörner 14 bspw. aus der Reihe 12 zu entfernen.

Es ist möglich, dass die Bewegungsgeschwindigkeit VB steuer- und/oder regelbar ist. Wobei hierfür die Bodenbearbeitungsvorrichtung 10 jeweils eine Antriebseinrichtung 30 (z.B. Motor) aufweist, welche bspw. steuer- und/oder regelbar ist. Wobei die Antriebseinrichtung 30 bspw. mit zumindest einer Antriebsscheibe und somit mit dem Endlosmontageband 32 gekoppelt und/oder wirktechnisch verbunden sein kann.

Das Steuern und/oder Regeln der Bewegungsgeschwindigkeit VB erfolgt anhand einer Fahrgeschwindigkeit VF derartig, dass eine Differenz der Fahrgeschwindigkeit VF und einer durch die Bewegungsgeschwindigkeit VB hervorgerufene Relativgeschwindigkeit VR der Werkezeuge 22 in Fahrtrichtung FR im Wesentlichen null ist, vergl. hierzu Figur 1B.

Der Winkel β kann mindestens 10° oder mindestens 20° oder mindestens 30° betragen und/oder maximal 80° oder maximal 70° oder maximal 60° betragen.

Wie aus der Figur 2B hervorgeht, bilden die Umlaufbahn 24 und die Fahrtrichtung FR, das heißt die Pflanzenreihe 12 ein Vektordreieck, so dass die Bewegungsgeschwindigkeit VB sich in Abhängigkeit des Winkel β und der Fahrgeschwindigkeit VF verändert. Wobei die Bewegungsgeschwindigkeit VB somit zweckmäßig anhand der Gesetzmäßigkeiten der Trigonometrie berechnet werden kann. Bspw. kann die Fahrgeschwindigkeit VF die Ankathete bilden, die Bewegungsgeschwindigkeit VB kann bspw. die Hypotenuse und eine Durchhackgeschwindigkeit VD kann bspw. eine Gegenkathete bilden, welche jeweils entsprechende Alphawinkel α und Gammawinkel γ sowie den Winkel β einschließen.

Beträgt bspw. der Winkel β 40° und die Fahrgeschwindigkeit 2,7m/s, so ergibt sich ein Alphawinkel α von 50° und ein Gammawinkel γ von 90°. Zudem ergibt sich hieraus durch einen Quotienten der Fahrgeschwindigkeit VF (2,7m/s) mit dem Sinus des Alphawinkel α (sin 50°) die Bewegungsgeschwindigkeit VB (3,52m/s). Hiervon ausgehend kann nun mit dem Satz des Pythagoras die Durchhackgeschwindigkeit VD berechnet werden, welche somit 2,52m/s beträgt.

Gemäß der Ausführungsbeispiele ist insbesondere vorgesehen, dass die Bewegungsgeschwindigkeit VB größer ist als die Fahrgeschwindigkeit VF. Wobei die Differenz der Bewegungsgeschwindigkeit VB zur Fahrgeschwindigkeit VF je größer ist, desto größer der Winkel β ist.

Die Werkzeuge 22 sind in aufrechter Weise an einem, vorzugsweise verformbaren, Endlosmontageelement 32 angeordnet.

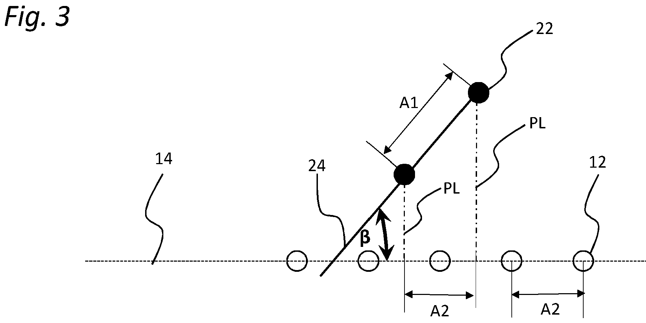

Der horizontale Abstand A1 von zwei Werkzeugen 22 zueinander ist größer zu einem Abstand A2 von zwei Pflanzen 14 und/oder Saatkörnern 14 einer Reihe 12. Was sich wiederum durch die Berechnung des Vektordreieck ergibt oder alternativ durch eine Projektion des Abstands von Pflanzen in einer Reihe 14 gemäß der Figur 3 ergibt. Basierend auf dem Abstand A2 von Pflanzen 14 zueinander und einer gewünschten Bearbeitung durch das Werkzeug 22 exakt zwischen zwei Pflanzen 12, ergibt sich durch eine senkrechte Projektion der Pflanzen 14 bzw. der Pflanzenreihe 12 auf die Orientierung der Umlaufbahn 24 im Winkel β mittels Projektionslinien PL ein horizontaler Abstand A1 der Werkzeuge 22 zueinander auf der Umlaufbahn 24.

Wobei sich mittels dieser Projektion insbesondere ergibt, dass die Differenz des horizontalen Abstands A1 von zwei Werkzeugen 22 zueinander zu einem Abstand A2 von zwei Pflanzen 14 und/oder Saatkörnern 14 einer Reihe 12 je größer ist, desto größer der Winkel β ist. Wobei die Differenz des horizontalen Abstands A1 von zwei Werkzeugen 22 zueinander zu einem Abstand A2 von zwei Pflanzen 14 und/oder Saatkörnern 14 einer Reihe 12 vorzugsweise mindestens 1cm oder mindestens 2cm oder mindestens 3cm oder mindestens 5cm beträgt und/oder dass der horizontale Abstand A1 von zwei Werkzeugen 22 auf dem Endlosmontageelement 32 veränderbar ist.

Die Werkzeuge 22 (insbesondere die Steher 26) sind in aufrechter Weise (gemäß der Ausführungsbeispiele senkrecht zur Fahrtrichtung FR und zur Reihe 12 der Reihenkultur) an einem, vorzugsweise verformbaren, Endlosmontageelement 32 (z.B. Keilriemen) angeordnet.

Die Umlaufbahn 24 weist jeweils einen zumindest abschnittweise Linear verlaufenden Abschnitt auf, bzw. ist gemäß der Ausführungsbeispiele jeweils vorgesehen, dass die Umlaufbahn 24 entlang deren gesamter Längserstreckung Linear verläuft.

Wobei gemäß der Ausführungsbeispiele auch eine Anordnung von zwei Bodenbearbeitungsvorrichtungen 10 hintereinander an einer Bodenbearbeitungsmaschine 100 entsprechend an den Abstand von Pflanzen 14 in einer Reihe 12 angepasst sein kann.

Die Umlaufbahn 24 ist derartig ausgeführt und in einem Winkel β zur Fahrtrichtung FR angeordnet, dass die Werkzeuge 22 quer zu den Reihen 12 der Reihenkultur bewegt werden, wobei hierfür die Umlaufbahn 24 in Fahrtrichtung FR eine Längserstreckung A3 ausweist welche größer (oder gleich) ist zu einem horizontalen Abstand A1 von zwei Werkzeugen 22 zueinander. Wobei die Längserstreckung A3 im Wesentlichen parallel zur Fahrtrichtung FR und/oder zur Reihe 12 der Reihenkultur ist.

Des Weiteren ist die Umlaufbahn 24 gemäß der Ausführungsbeispiele derartig ausgeführt, dass diese eine aufrechte Ausrichtung aufweist, zwar derartig, dass zwei Werkzeuge 22 übereinander entlang der Umlaufbahn 24 bewegbar sind.

Gemäß der Ausführungsbeispiele ist es möglich, dass die Bodenbearbeitungsmaschine 100 zumindest zwei hintereinander angeordnete Bodenbearbeitungsvorrichtungen 10 mit Werkzeugen 22 aufweist, wobei diese derartig angeordnet sind, dass jeder Bereich zwischen zwei Pflanzen und/oder Saatkörnern 14 wenigstens zweimal mittels einer Werkzeuges 22 bearbeitet wird, vorzugsweise in gleiche oder unterschiedliche Richtungen quer zur Fahrtrichtung FR bearbeitet wird.

Eine exakte Bodenbearbeitung in einer Reihe 12 einer Reihenkultur kann erreicht werden, indem eine Bewegung der Werkzeuge 22 entlang der Umlaufbahn 24 in Abhängigkeit von Positionen einer Pflanze 14 und/oder eines Saatkorn 14 der Reihe 12 erfolgt. Wobei hierfür ein einmaliges und/oder ein kontinuierliches Erfassen einer Position zumindest einer Pflanze 14 und/oder eines Saatkorns 14 einer Reihe 12 mittels einer Erfassungseinrichtung 36 vorgesehen sein kann.

Zudem kann Anhand der Signale / Daten der Erfassungseinrichtung 36 eine Bestimmung der Position der Pflanze 14 und/oder des Saatkorn 14 gegenüber zumindest einem Werkzeug 22 erfolgen. Wobei hierfür bspw. in der Erfassungseinrichtung 36 und/oder in einer mit der Erfassungseinrichtung 36 gekoppelten Steuereinrichtung ein Abstandswert zwischen der Umlaufbahn 24 und/oder dem Werkzeug 22 und der Erfassungseinrichtung 36 hinterlegt oder eingegeben werden kann und anhand dieses Abstandswert die exakte Position bestimmt werden kann.

Insofern die Werkzeuge 22 nicht die erforderliche Position gegenüber den Pflanzen und/oder Saatkörner 14 aufweisen, kann zudem eine Anpassung der Position der Werkzeuge 22 gegenüber den Pflanzen und/oder den Saatkörnern erfolgen.

Wie aus den Ausführungsbeispielen hervorgeht, sind an den Bodenbearbeitungsmaschinen 100, respektive der Trägerkonstruktion 18 jeweils zwei Bodenbearbeitungsvorrichtungen 10 in Fahrtrichtung FR hintereinander angeordnet. Zudem sind zumindest zwei Bodenbearbeitungsvorrichtungen 10 hintereinander und quer zur Fahrtrichtung FR zumindest zwei Bodenbearbeitungsvorrichtungen 10 nebeneinander angeordnet.

Wie aus den Ausführungsbeispielen hervorgeht (siehe Figur 1B oder 2B), ist es möglich, dass die Werkzeuge 22 der zwei hintereinander angeordneten Bodenbearbeitungsvorrichtungen 10 unterschiedliche Sollpositionen gegenüber einer Pflanze 14 und/oder oder einem Saatkorn 14 aufweisen um somit den Bereich zwischen zwei Pflanzen 14 und/oder Saatkörnern 14 einer Reihe 12 optimal zu bearbeiten.

Um auch Bereiche zwischen zwei Reihen 12 einer Reihenkultur zu bearbeiten, insbesondere um auch in diesen Bereichen eine mechanische Unkrautbekämpfung durchführen zu können, sind gemäß der Figur 1 und 4 zwischen zwei Bodenbearbeitungsvorrichtungen 10 zudem Lockerungselemente 38 angeordnet. Als Lockerungselemente 38 werden Zinken mit Scharen eingesetzt, es wären jedoch auch Schneidscheiben oder dergl. denkbar.

Wobei die Lockerungselemente 38 insbesondere in deren Höhenlage gegenüber den Bodenbearbeitungsvorrichtungen 10 veränderbar sind. Wobei es auch denkbar wäre, dass die Bodenbearbeitungsvorrichtungen 10 in dessen Höhenlage gegenüber den Lockerungselementen 38 veränderbar sind. Zur Verstellung der Höhenlage der Lockerungselemente 10 ist eine Verstelleinrichtung 40 vorgesehen, bspw. in Form eins Parallelogramms, wobei auch eine Linearführung oder dergl. als Verstelleinrichtung 40 denkbar wäre. Wobei eine derartige Verstelleinrichtung 40 auch zur Verstellung einer Höhenlage der Bodenbearbeitungsvorrichtungen 10 denkbar wäre.

Zur Erfassung der Höhenlage der Bodenbearbeitungsvorrichtung 10 ist es möglich, dass eine Sensoreinrichtung 42 vorgesehen ist, welche Sensoreinrichtung 42 dazu eingerichtet ist, eine Höhenlage der Bodenbearbeitungsvorrichtung 10 gegenüber der Trägerkonstruktion 18 und/oder gegenüber der landwirtschaftlichen Fläche 20 zu erfassen. Wobei die Sensoreinrichtung einen oder mehrere zwischen der Trägerkonstruktion 18 und/oder Bodenbearbeitungsvorrichtung 10 angeordnete Winkelsensoren umfassen kann und/oder an der Bodenbearbeitungsvorrichtung angeordnete Abstandssensoren (z.B. Ultraschallsensoren) umfassen kann. Auch Kraftsensoren, welche eine auf die Werkzeuge und/oder die Bodenbearbeitungsvorrichtung wirkende Kraft ermitteln wären denkbar.

### Bezugszeichenliste:

| | | | |
|---|---|---|---|
| 10 | Bodenbearbeitungsvorrichtung | A1 | horizontaler Abstand |
| 12 | Reihe, Pflanzenreihe, Saatkornreihe | A2 | Abstand |
| 14 | Pflanze, Saatkorn | A3 | Längserstreckung |
| 16 | Dreipunkt-Anhängung | | |
| 18 | Trägerkonstruktion | FR | Fahrtrichtung |
| 20 | Fläche | | |
| 22 | Werkzeug | VB | Bewegungsgeschwindigkeit |
| 24 | Umlaufbahn | VF | Fahrgeschwindigkeit |
| 26 | Steher | VR | Relativgeschwindigkeit |
| 28 | Schar; Striegel | VD | Durchhackgeschwindigkeit |
| 30 | Antriebseinrichtung | | |
| 32 | Endlosmontageband | α | Alphawinkel |
| 36 | Erfassungseinrichtung | β | Winkel |
| 38 | Lockerungselement | γ | Gammawinkel |
| 40 | Verstelleinrichtung | | |
| 42 | Sensoreinrichtung | PL | Projektionslinie |
| 100 | Bodenbearbeitungsmaschine | | |
| 102 | Fahrantrieb | | |

## Patentansprüche

1. Bodenbearbeitungsvorrichtung (10), vorzugsweise zur Bodenbearbeitung in einer Reihe (12) einer Reihenkultur, wobei die Bodenbearbeitungsvorrichtung zur Montage an eine Trägerkonstruktion (18) und zur Bewegung mit einer Fahrgeschwindigkeit (VF) in Fahrtrichtung (FR) parallel entlang einer Reihe (12) einer Reihenkultur auf einer landwirtschaftlichen Fläche (20) eingerichtet ist, **dadurch gekennzeichnet, dass** die Bodenbearbeitungsvorrichtung (10) Werkzeuge (22) aufweist, welche eingerichtet sind sternförmig entlang einer Umlaufbahn (24), wie einer Führungskulisse oder dergleichen, mit veränderbarer Bewegungsgeschwindigkeit (VB) bewegt zu werden, wobei die Umlaufbahn (24) in einem Winkel (β) quer zur Fahrtrichtung (FR) orientiert ist, welcher Winkel (β)
- mindestens 10° oder mindestens 20° oder mindestens 30° beträgt und/oder
- maximal 80° oder maximal 70° oder maximal 60° beträgt.

2. Bodenbearbeitungsvorrichtung (10) nach Anspruch 1, **dadurch gekennzeichnet, dass** die Bewegungsgeschwindigkeit (VB) größer ist als die Fahrgeschwindigkeit (VF).

3. Bodenbearbeitungsvorrichtung (10) nach Anspruch 2, **dadurch gekennzeichnet, dass** eine Differenz der Bewegungsgeschwindigkeit (VB) zur Fahrgeschwindigkeit (VF) je größer ist, desto größer der Winkel (β) ist.

4. Bodenbearbeitungsvorrichtung (10) nach einem der vorhergehenden Ansprüche, **dadurch gekennzeichnet, dass** zur Veränderung der Bewegungsgeschwindigkeit (VB), die Bewegungsgeschwindigkeit (VB) steuer- und/oder regelbar ist, vorzugsweise mittels einer Antriebseinrichtung (30) steuer- und/oder regelbar ist, wobei ein Steuern und/oder Regeln der Bewegungsgeschwindigkeit (VB) anhand einer Fahrgeschwindigkeit (VF) derartig erfolgt, dass eine Differenz der Fahrgeschwindigkeit (VF) und einer durch die Bewegungsgeschwindigkeit (VB) hervorgerufene Relativgeschwindigkeit (VR) der Werkzeuge (22) in Fahrtrichtung (FR) im Wesentlichen null ist.

5. Bodenbearbeitungsvorrichtung (10) nach einem der vorhergehenden Ansprüche, **dadurch gekennzeichnet, dass** die Fahrgeschwindigkeit (VF) steuer- und/oder regelbar ist, vorzugsweise mittels eines Fahrantriebes (102) steuer- und/oder regelbar ist, wobei ein Steuern und/oder Regeln der Fahrgeschwindigkeit (VF) anhand der Bewegungsgeschwindigkeit (VB) derartig erfolgt, dass eine Differenz der Fahrgeschwindigkeit (VF) und einer durch die Bewegungsgeschwindigkeit (VB) hervorgerufenen Relativgeschwindigkeit (VR) der Werkzeuge (22) in Fahrtrichtung (FR) im Wesentlichen null ist.

6. Bodenbearbeitungsvorrichtung (10) nach einem der vorhergehenden Ansprüche, **dadurch gekennzeichnet, dass** die Umlaufbahn (24) einen zumindest abschnittweise Linear verlaufenden Abschnitt aufweist, vorzugsweise entlang deren gesamter Längserstreckung Linear verläuft.

7. Bodenbearbeitungsvorrichtung (10) nach einem der vorhergehenden Ansprüche, **dadurch gekennzeichnet, dass** die Werkzeuge (22) in aufrechter Weise an einem, vorzugsweise verformbaren, Endlosmontageelement (32) angeordnet sind.

8. Bodenbearbeitungsvorrichtung (10) nach einem der vorhergehenden Ansprüche, **dadurch gekennzeichnet,**
- **dass** der horizontale Abstand (A1) von zwei Werkzeugen (22) zueinander größer ist zu einem Abstand (A2) von zwei Pflanzen (14) und/oder Saatkörnern (14) einer Reihe (12) und/oder
- **dass** die Differenz des horizontalen Abstands (A1) von zwei Werkzeugen (22) zueinander zu einem Abstand (A2) von zwei Pflanzen (14) und/oder Saatkörnern (14) einer Reihe (12) je größer ist, desto größer der Winkel (β) ist und/oder
- **dass** die Differenz des horizontalen Abstands (A1) von zwei Werkzeugen (22) zueinander zu einem Abstand (A2) von zwei Pflanzen (14) und/oder Saatkörnern (14) einer Reihe (12) vorzugsweise mindestens 1cm oder mindestens 2cm oder mindestens 3cm oder mindestens 5cm beträgt und/oder
- **dass** der horizontale Abstand (A1) von zwei Werkzeugen (22) auf dem Endlosmontageelement (32) veränderbar ist.

9. Bodenbearbeitungsvorrichtung (10) nach einem der vorhergehenden Ansprüche, **dadurch gekennzeichnet, dass**
- die Umlaufbahn (24) in Fahrtrichtung (FR) eine Längserstreckung (A3) aufweist welche größer oder gleich ist zu einem Horizontalen Abstand (A1) von zwei Werkzeugen (22) zueinander und/oder
- dass die Umlaufbahn (24) eine derartig aufrechte Ausrichtung aufweist, dass zwei Werkzeuge (22) übereinander entlang der Umlaufbahn (24) bewegbar sind.

10. Bodenbearbeitungsvorrichtung (10) nach einem der vorhergehenden Ansprüche, **dadurch gekennzeichnet, dass** die Werkzeuge (22) in einer, keine Bewegungen ausführenden, Grundstellung eine nicht mittige Position gegenüber der Umlaufbahn (24) aufweisen, insbesondere keine Anordnung im Bereich der Reihe (12) der Reihenkultur aufweisen.

11. Verfahren zur Bodenbearbeitung in einer Reihe (12) einer Reihenkultur, aufweisend die Schritte,
- Bereitstellen einer Bodenbearbeitungsvorrichtung (10) und/oder Bereitstellen mehrerer Bodenbearbeitungsvorrichtungen (10), mit Werkzeugen (22), welche Werkzeuge (22) sternförmig entlang einer Umlaufbahn (24), wie einer Führungskulisse oder dergleichen, mit einer Bewegungsgeschwindigkeit (VB) bewegt werden, wobei die Umlaufbahn (24) in einem Winkel (β) quer zur Fahrtrichtung (FR) orientiert ist, wobei der Winkel (β) mindestens 10° oder mindestens 20° oder mindestens 30° beträgt und/oder maximal 80° oder maximal 70° oder maximal 60° beträgt,
- Bewegen der einen Bodenbearbeitungsvorrichtung (10) und/oder der mehreren Bodenbearbeitungsvorrichtungen (10) in Fahrtrichtung (FR) parallel entlang einer Reihe (12) einer Reihenkultur mittels einer Fahrgeschwindigkeit (VF),
- Steuern- und/oder Regeln der Bewegungsgeschwindigkeit (VB) und/oder der Fahrgeschwindigkeit (VF) derartig, dass eine Differenz der Fahrgeschwindigkeit (VF) und einer durch die Bewegungsgeschwindigkeit (VB) hervorgerufenen Relativgeschwindigkeit (VR) der Werkzeuge (22) in Fahrtrichtung (FR) im Wesentlichen null ist.

12. Verfahren nach Anspruch 11, **gekennzeichnet durch** den Schritt,
- einmaliges und/oder kontinuierliches Erfassen einer Position zumindest einer Pflanze (14) und/oder eines Saatkorn (14) einer Reihe (12) mittels einer Erfassungseinrichtung (36) und Bestimmung der Position der Pflanze (14) und/oder des Saatkorn (14) gegenüber zumindest einem Werkzeug (22) sowie Anpassung der Position des Werkzeugs (22) gegenüber der Pflanze (14) und/oder dem Saatkorn (14) auf eine Sollposition.

13. Verfahren nach zumindest einem der Ansprüche 11 bis 12, **dadurch gekennzeichnet, dass** eine Anpassung der Position der Werkzeuge (22) gegenüber der Pflanze (14) und/oder eines Saatkorns (14) durch zumindest einem von folgenden erfolgt,
- eine Erhöhung oder Verringerung der Bewegungsgeschwindigkeit (VB), und/oder
- eine Drehrichtungsumkehr der Bewegung der Werkzeuge (22) entlang der Kurvenbahn (24), und/oder
- eine Erhöhung oder Verringerung der Fahrgeschwindigkeit (VF).

14. Verfahren nach zumindest einem der Ansprüche 11 bis 13 **dadurch gekennzeichnet, dass** die mehreren Bodenbearbeitungsvorrichtungen (10)
- eine zumindest weitgehend identische Bewegungsgeschwindigkeit (VB) aufweisen und/oder unterschiedliche Bewegungsgeschwindigkeiten (VB) aufweisen und/oder
- eine unterschiedliche oder identische Sollposition aufweisen und/oder
- derartig entlang der Kurvenbahn (24) bewegt werden, dass zumindest ein Zwischenraum zwischen zwei Pflanzen (14) und/oder Saatkörnern (14) einer Reihe (12) zumindest doppelt bearbeitet wird.

15. Landwirtschaftliche Bodenbearbeitungsmaschine (100), vorzugsweise zur Bodenbearbeitung in einer Reihe (12) einer Reihenkultur, insbesondere zur mechanischen Unkrautbekämpfung in einer Reihe (12) einer Reihenkultur, wobei die Bodenbearbeitungsmaschine (100) eingerichtet ist mit einer Fahrgeschwindigkeit (VF) in Fahrtrichtung (FR) parallel entlang einer Reihe (12) einer Reihenkultur auf einer landwirtschaftlichen Fläche (20) bewegt zu werden und wobei die Bodenbearbeitungsmaschine (100) eine Trägerkonstruktion (18) aufweist, wobei an der Trägerkonstruktion (18) zumindest
- zwei Bodenbearbeitungsvorrichtungen (10) nebeneinander angebracht sind und/oder
- zwei Bodenbearbeitungsvorrichtungen (10) nebeneinander und zumindest zwei Bodenbearbeitungsvorrichtungen (10) hintereinander angebracht sind, **dadurch gekennzeichnet, dass** die Bodenbearbeitungsvorrichtungen (10) nach zumindest einem der Ansprüche 1 bis 10 ausgeführt sind und/oder dass die Bodenbearbeitungsmaschine (100) eingerichtet ist ein Verfahren nach zumindest einem der Ansprüche 11 bis 14 auszuführen.

16. Bodenbearbeitungsmaschine (100) nach Anspruch 15, **dadurch gekennzeichnet**, zwischen zwei quer zur Fahrtrichtung (FR) nebeneinander angeordneten Bodenbearbeitungsvorrichtungen (10) Lockerungselemente (38) angeordnet sind, wobei
- die Lockerungselemente (38) in dessen Höhenlage gegenüber den Bodenbearbeitungsvorrichtungen (10) veränderbar gelagert sind und/oder wobei
- die Bodenbearbeitungsvorrichtungen (10) in dessen Höhenlage gegenüber den Lockerungselementen (38) und/oder der Trägerkonstruktion (18) veränderbar gelagert sind.

17. Bodenbearbeitungsmaschine (100) nach wenigstens einem der Ansprüche 15 oder 16, **dadurch gekennzeichnet, dass** die Bodenbearbeitungsvorrichtungen (10) mittels einer Verstelleinrichtung (40) höhenverstellbar gegenüber der Trägerkonstruktion (18) gelagert sind.

18. Bodenbearbeitungsmaschine (100) nach Anspruch 17, **dadurch gekennzeichnet, dass** die Höhenlage der Bodenbearbeitungseinrichtung gegenüber der Trägerkonstruktion (18) Anhand einer Bewegungsgeschwindigkeit (VB) und/oder Anhand einer Fahrgeschwindigkeit (VF) und/oder Anhand einer Position der Werkzeuge (22) gegenüber einer Pflanze (14) und/oder einem Saatkorn (14) einer Reihe (12) veränderbar ist.

19. Bodenbearbeitungsmaschine (100) nach wenigstens einem der Ansprüche 15 bis 18, **dadurch gekennzeichnet, dass** die Bodenbearbeitungsmaschine (100) als selbstfahrende Bodenbearbeitungsmaschine (100) ausgeführt ist, vorzugsweise als autonome selbstfahrende Bodenbearbeitungsmaschine (100) ausgeführt ist.

## Claims

1. A soil-working apparatus (10), preferably for working soil in a row (12) of a row crop, wherein the soil-working apparatus is configured to be mounted onto a support structure (18) and to be moved at a driving speed (VF) in the direction of travel (FR) parallel to and along a row (12) of a row crop on an area of agricultural land (20), **characterized in that** the soil-working apparatus (10) has tools (22) which are configured to be moved in a star-shaped manner along a circulation path (24), such as a slotted guide or the like, at a variable speed of movement (VB), wherein the circulation path (24) is oriented at an angle (β) transversely with respect to the direction of travel (FR), which angle (β)
- is at least 10° or at least 20° or at least 30° and/or
- is at most 80° or at most 70° or at most 60°.

2. The soil-working apparatus (10) according to Claim 1, **characterized in that** the speed of movement (VB) is greater than the driving speed (VF).

3. The soil-working apparatus (10) according to Claim 2, **characterized in that** a difference between the speed of movement (VB) and the driving speed (VF) is greater the greater the angle (β) .

4. The soil-working apparatus (10) according to one of the preceding claims, **characterized in that**, for varying the speed of movement (VB), the speed of movement (VB) is controllable and/or regulable, preferably is controllable and/or regulable by means of a drive device (30), wherein the speed of movement (VB) is controlled and/or regulated on the basis of a driving speed (VF) in such a way that a difference between the driving speed (VF) and a relative speed (VR), brought about by the speed of movement (VB), of the tools (22) in the direction of travel (FR) is substantially zero.

5. The soil-working apparatus (10) according to one of the preceding claims, **characterized in that** the driving speed (VF) is controllable and/or regulable, preferably is controllable and/or regulable by means of a traction drive (102), wherein the driving speed (VF) is controlled and/or regulated on the basis of the speed of movement (VB) in such a way that a difference between the driving speed (VF) and a relative speed (VR), brought about by the speed of movement (VB), of the tools (22) in the direction of travel (FR) is substantially zero.

6. The soil-working apparatus (10) according to one of the preceding claims, **characterized in that** the circulation path (24) has a portion which runs linearly at least in certain portions, preferably which runs linearly along its entire longitudinal extent.

7. The soil-working apparatus (10) according to one of the preceding claims, **characterized in that** the tools (22) are arranged in an upright state on a preferably deformable endless mounting element (32).

8. The soil-working apparatus (10) according to one of the preceding claims, **characterized**
- **in that** the horizontal distance (A1) between two tools (22) is greater than a distance (A2) between two plants (14) and/or seeds (14) of a row (12) and/or
- **in that** the difference between the horizontal distance (A1) between two tools (22) and a distance (A2) between two plants (14) and/or seeds (14) of a row (12) is greater the greater the angle (β) and/or
- **in that** the difference between the horizontal distance (A1) between two tools (22) and a distance (A2) between two plants (14) and/or seeds (14) of a row (12) is preferably at least 1 cm or at least 2 cm or at least 3 cm or at least 5 cm and/or
- **in that** the horizontal distance (A1) between two tools (22) on the endless mounting element (32) is variable.

9. The soil-working apparatus (10) according to one of the preceding claims, **characterized in that**
- the circulation path (24) has in the direction of travel (FR) a longitudinal extent (A3) which is greater than or equal to a horizontal distance (A1) between two tools (22), and/or
- **in that** the circulation path (24) has such an upright orientation that two tools (22) are movable along the circulation path (24) one above the other.

10. The soil-working apparatus (10) according to one of the preceding claims, **characterized in that** the tools (22), in a starting position, in which no movements are performed, have a non-central position in relation to the circulation path (24), in particular are not arranged in the region of the row (12) of the row crop.

11. A method for working soil in a row (12) of a row crop, comprising the following steps:
- providing a soil-working apparatus (10), and/or providing multiple soil-working apparatuses (10), having tools (22), which tools (22) are moved in a star-shaped manner along a circulation path (24), such as a slotted guide or the like, at a speed of movement (VB), wherein the circulation path (24) is oriented at an angle (β) transversely with respect to the direction of travel (FR), wherein the angle (β) is at least 10° or at least 20° or at least 30° and/or is at most 80° or at most 70° or at most 60°,
- moving the one soil-working apparatus (10) and/or the multiple soil-working apparatuses (10) in the direction of travel (FR) parallel to and along a row (12) of a row crop by means of a driving speed (VF),
- controlling and/or regulating the speed of movement (VB) and/or the driving speed (VF) in such a way that a difference between the driving speed (VF) and a relative speed (VR), brought about by the speed of movement (VB), of the tools (22) in the direction of travel (FR) is substantially zero.

12. The method according to Claim 11, **characterized by** the step
- detecting once and/or continuously a position of at least one plant (14) and/or one seed (14) of a row (12) by means of a detection device (36), and determining the position of the plant (14) and/or the seed (14) in relation to at least one tool (22), and adapting the position of the tool (22) in relation to the plant (14) and/or to the seed (14) according to a target position.

13. The method according to at least one of Claims 11 and 12, **characterized in that** an adaptation of the position of the tools (22) in relation to the plant (14) and/or to a seed (14) is realized by at least one of the following:
- increasing or reducing the speed of movement (VB), and/or
- reversing the turning direction for the movement of the tools (22) along the curved path (24), and/or
- increasing or reducing the driving speed (VF).

14. The method according to at least one of Claims 11 to 13, **characterized in that** the multiple soil-working apparatuses (10)
- have an at least largely identical speed of movement (VB) and/or different speeds of movement (VB), and/or
- have a different or identical target position, and/or
- are moved along the curved path (24) in such a way that at least one intermediate space between two plants (14) and/or seeds (14) of a row (12) is worked at least twice.

15. An agricultural soil-working machine (100), preferably for working soil in a row (12) of a row crop, in particular for mechanical weed control in a row (12) of a row crop, wherein the soil-working machine (100) is configured to be moved at a driving speed (VF) in the direction of travel (FR) parallel to and along a row (12) of a row crop on an area of agricultural land (20), and wherein the soil-working machine (100) has a support structure (18), wherein the support structure (18) has at least
- two soil-working apparatuses (10) attached to it one next to the other, and/or
- two soil-working apparatuses (10) attached to it one next to the other and at least two soil-working apparatuses (10) attached to it one behind the other, **characterized in that** the soil-working apparatuses (10) are designed according to at least one of Claims 1 to 10, and/or **in that** the soil-working machine (100) is configured to carry out a method according to at least one of Claims 11 to 14.

16. The soil-working machine (100) according to Claim 15, **characterized in that** loosening elements (38) are arranged between two soil-working apparatuses (10) arranged one next to the other transversely to the direction of travel (FR), wherein
- the loosening elements (38) are mounted so as to be variable in the height position thereof in relation to the soil-working apparatuses (10), and/or wherein
- the soil-working apparatuses (10) are mounted so as to be variable in the height position thereof in relation to the loosening elements (38) and/or to the support structure (18).

17. The soil-working machine (100) according to at least one of Claims 15 and 16, **characterized in that** the soil-working apparatuses (10) are mounted so as to be height-adjustable in relation to the support structure (18) by means of an adjustment device (40).

18. The soil-working machine (100) according to Claim 17, **characterized in that** the height position of the soil-working device in relation to the support structure (18) is variable on the basis of a speed of movement (VB) and/or on the basis of a driving speed (VF) and/or on the basis of a position of the tools (22) in relation to a plant (14) and/or to a seed (14) of a row (12).

19. The soil-working machine (100) according to at least one of Claims 15 to 18, **characterized in that** the soil-working machine (100) is designed as a self-driving soil-working machine (100), preferably is designed as an autonomous self-driving soil-working machine (100).

## Revendications

1. Dispositif (10) de travail du sol, de préférence pour le travail du sol dans un rang (12) d'une culture en rangées, le dispositif de travail du sol étant conçu pour être monté sur une structure porteuse (18) et pour se déplacer à une vitesse d'avancement (VF) dans le sens d'avancement (FR) parallèlement à un rang (12) d'une culture en rangées, le long de ce rang, sur une surface agricole (20), **caractérisé en ce que** le dispositif (10) de travail du sol comprend des outils (22) qui sont disposés en étoile le long d'une voie circulaire (24), telle qu'une coulisse de guidage ou similaire, et aptes à être déplacés avec une vitesse de déplacement variable (VB), la voie circulaire (24) étant orientée selon un angle (β) transversal à le sens d'avancement (FR), lequel angle (β)
- est d'au moins 10° ou d'au moins 20° ou d'au moins 30° et/ou
- est au maximum de 80° ou au maximum de 70° ou au maximum de 60°.

2. Dispositif (10) de travail du sol selon la revendication 1, **caractérisé en ce que** la vitesse de déplacement (VB) est supérieure à la vitesse d'avancement (VF) .

3. Dispositif (10) de travail du sol selon la revendication 2, **caractérisé en ce qu'**une différence entre la vitesse de déplacement (VB) et la vitesse d'avancement (VF) est d'autant plus grande que l'angle (β) est grand.

4. Dispositif (10) de travail du sol selon l'une des revendications précédentes, **caractérisé en ce que**, pour modifier la vitesse de déplacement (VB), la vitesse de déplacement (VB) est apte à être commandée et/ou régulée, de préférence au moyen d'un dispositif d'entraînement (30), une commande et/ou une régulation de la vitesse de déplacement (VB) s'effectuant en utilisant une vitesse d'avancement (VF) de telle sorte qu'une différence entre la vitesse d'avancement (VF) et une vitesse relative (VR) des outils (22) provoquée par la vitesse de déplacement (VB) dans le sens d'avancement (FR) soit sensiblement nulle.

5. Dispositif (10) de travail du sol selon l'une des revendications précédentes, **caractérisé en ce que** la vitesse d'avancement (VF) est apte à être commandée et/ou régulée, de préférence au moyen d'un entraînement de déplacement (102), une commande et/ou une régulation de la vitesse d'avancement (VF) en utilisant la vitesse de déplacement (VB) s'effectuant de telle sorte qu'une différence entre la vitesse d'avancement (VF) et une vitesse relative (VR) des outils (22) provoquée par la vitesse de déplacement (VB) dans le sens d'avancement (FR) est sensiblement nulle.

6. Dispositif (10) de travail du sol selon l'une des revendications précédentes, **caractérisé en ce que** la voie circulaire (24) présente une section s'étendant au moins partiellement de manière linéaire, de préférence de manière linéaire le long de toute son étendue longitudinale.

7. Dispositif (10) de travail du sol selon l'une des revendications précédentes, **caractérisé en ce que** les outils (22) sont disposés de manière verticale sur un élément de montage sans fin (32), de préférence déformable.

8. Dispositif (10) de travail du sol selon l'une des revendications précédentes, **caractérisé**
- **en ce que** la distance horizontale (A1) entre deux outils (22) est supérieure à une distance (A2) entre deux plantes (14) et/ou graines (14) d'un même rang (12) et/ou
- **en ce que** la différence de la distance horizontale (A1) de deux outils (22) l'un par rapport à l'autre par rapport à une distance (A2) de deux plantes (14) et/ou graines (14) d'un rang (12) est d'autant plus grande que l'angle (β) est grand et/ou
- **en ce que** la différence entre la distance horizontale (A1) entre deux outils (22) et une distance (A2) entre deux plantes (14) et/ou graines (14) d'un rang (12) est de préférence d'au moins 1cm ou d'au moins 2cm ou d'au moins 3cm ou d'au moins 5cm et/ou
- **en ce que** la distance horizontale (A1) de deux outils (22) sur l'élément de montage sans fin (32) est modifiable.

9. Dispositif (10) de travail du sol selon l'une des revendications précédentes, **caractérisé en ce que**
- la voie circulaire (24) présente, dans le sens d'avancement (FR), une extension longitudinale (A3) qui est supérieure ou égale à une distance horizontale (A1) entre deux outils (22) et/ou
- **en ce que** la voie circulaire (24) présente une orientation verticale telle que deux outils (22) sont aptes à être déplacés l'un au-dessus de l'autre le long de la voie circulaire (24).

10. Dispositif (10) de travail du sol selon l'une des revendications précédentes, **caractérisé en ce que** les outils (22), dans une position de base sans mouvement, présentent une position non centrale par rapport à la voie circulaire (24), notamment ne présentent pas de disposition au niveau du rang (12) de la culture en rangées.

11. Procédé de travail du sol sur un rang (12) d'une culture en rangées, comprenant les étapes suivantes,
- fourniture d'un dispositif (10) de travail du sol et/ou fourniture de plusieurs dispositifs (10) de travail du sol, avec des outils (22), lesquels outils (22) sont disposés en étoile le long d'une voie circulaire (24), telle qu'une coulisse de guidage ou similaire, et sont aptes à être déplacés avec une vitesse de déplacement (VB), la voie circulaire (24) étant orientée selon un angle (β) transversalement à le sens d'avancement (FR), l'angle (β) étant d'au moins 10° ou d'au moins 20° ou d'au moins 30° et/ou étant de 80° maximum ou de 70° maximum ou de 60° maximum,
- déplacement d'un dispositif (10) de travail du sol et/ou de plusieurs dispositifs (10) de travail du sol dans le sens d'avancement (FR) parallèlement le long d'un rang (12) d'une culture en rangées au moyen d'une vitesse d'avancement (VF),
- commande et/ou régulation de la vitesse de déplacement (VB) et/ou de la vitesse d'avancement (VF) de telle sorte qu'une différence entre la vitesse d'avancement (VF) et une vitesse relative (VR) des outils (22) induite par la vitesse de déplacement (VB) soit sensiblement nulle dans le sens d'avancement (FR).

12. Procédé selon la revendication 11, **caractérisé par** l'étape suivante,
- détection unique et/ou continue d'une position d'au moins une plante (14) et/ou d'une graine (14) d'un rang (12) au moyen d'un dispositif de détection (36) et détermination de la position de la plante (14) et/ou de la graine (14) par rapport à au moins un outil (22) et adaptation de la position de l'outil (22) par rapport à la plante (14) et/ou à la graine (14) en une position de consigne.

13. Procédé selon au moins l'une des revendications 11 à 12, **caractérisé en ce qu'**une adaptation de la position des outils (22) par rapport à la plante (14) et/ou à une graine (14) est réalisée par au moins l'un des éléments suivants,
- une augmentation ou une diminution de la vitesse de déplacement (VB), et/ou
- une inversion du sens de rotation du mouvement des outils (22) le long de la trajectoire courbe (24), et/ou
- une augmentation ou une diminution de la vitesse d'avancement (VF).

14. Procédé selon au moins l'une des revendications 11 à 13, **caractérisé en ce que** les dispositifs de la pluralité de dispositifs (10) de travail du sol
- présentent une vitesse de déplacement (VB) au moins en grande partie identique et/ou présentent des vitesses de déplacement (VB) différentes et/ou
- présentent une position de consigne différente ou identique et/ou
- sont déplacés le long de la voie courbe (24) de telle sorte qu'au moins un espace entre deux plantes (14) et/ou graines de semence (14) d'un rang (12) est travaillé au moins deux fois.

15. Machine agricole (100) de travail du sol, de préférence pour le travail du sol dans un rang (12) d'une culture en rangées, en particulier pour le désherbage mécanique dans un rang (12) d'une culture en rangées, la machine (100) de travail du sol étant conçue pour être déplacée à une vitesse d'avancement (VF) dans le sens d'avancement (FR) parallèlement à un rang (12) d'une culture en rangées, le long de ce rang, sur une surface agricole (20) et la machine (100) de travail du sol présentant une structure porteuse (18) ; sur la structure porteuse (18), au moins
- deux dispositifs (10) de travail du sol sont montés l'un à côté de l'autre et/ou
- deux dispositifs (10) de travail du sol sont montés l'un à côté de l'autre et au moins deux dispositifs (10) de travail du sol sont montés l'un derrière l'autre, **caractérisé en ce que** les dispositifs (10) de travail du sol sont réalisés selon au moins l'une des revendications 1 à 10 et/ou **en ce que** la machine (100) de travail du sol est agencée pour mettre en œuvre un procédé selon au moins l'une des revendications 11 à 14.

16. Machine (100) de travail du sol selon la revendication 15, **caractérisée en ce que** des éléments d'ameublissement (38) sont disposés entre deux dispositifs (10) de travail du sol disposés l'un à côté de l'autre transversalement au sens d'avancement (FR), dans laquelle
- les éléments d'ameublissement (38) sont montés de manière modifiable dans leur position en hauteur par rapport aux dispositifs (10) de travail du sol et/ou dans laquelle
- les dispositifs (10) de travail du sol sont montés de manière modifiable dans leur position en hauteur par rapport aux éléments d'ameublissement (38) et/ou à la structure porteuse (18).

17. Machine (100) de travail du sol selon au moins l'une des revendications 15 ou 16, **caractérisée en ce que** les dispositifs (10) de travail du sol sont montés réglables en hauteur par rapport à la structure porteuse (18) au moyen d'un dispositif de réglage (40).

18. Machine (100) de travail du sol selon la revendication 17, **caractérisée en ce que** la position en hauteur du dispositif de travail du sol par rapport à la structure porteuse (18) est modifiable en utilisant une vitesse de déplacement (VB) et/ou en utilisant une vitesse d'avancement (VF) et/ou en utilisant une position des outils (22) par rapport à une plante (14) et/ou une graine (14) d'un rang (12).

19. Machine (100) de travail du sol selon au moins l'une des revendications 15 à 18, **caractérisée en ce que** la machine (100) de travail du sol est réalisée sous forme de machine de travail du sol automotrice (100), de préférence sous forme de machine de travail du sol automotrice autonome (100).
